# EUROPEAN PATENT APPLICATION

(11) **EP 4 134 858 A1**
(43) Date of publication of application: **15.02.2023**
(21) Application number: 21382758.7
(22) Date of filing: 12.08.2021
(51) Int. Cl.: G06F 21/77

(54) **MANAGEMENT OF APPLICATIONS ON MULTIPLE SECURE ELEMENTS**

(71) Applicant: Giesecke+Devrient Mobile Security GmbH, 81677 München (DE)
(72) Inventor: PERARNAU, XAVIER, 08430 LA ROCA DEL VALLES (ES)
(74) Representative: Klunker IP Patentanwälte PartG mbB

(57) **Abstract**

The present invention relates to methods and devices for managing a plurality of secure elements and routing payloads to secure elements. A manager secure element is provided on a device, such as a smartcard. The manager secure element is connected to a plurality of secure elements residing on the mobile device via at least one communication channel. The manager SE is configured to manage the plurality of secure elements, and to route payload received from an external device to a selected one of the plurality of secure elements.

## Description

The present invention relates to smart cards in general and in particular to methods and devices for managing a plurality of secure elements and routing payloads to secure elements.

### BACKGROUND OF THE INVENTION

Smartcards are widely used in a variety of systems such as mobile phones, payment cards, or access cards to provide identification, authentication, data storage, and application processing.

Where the smartcard contains security-critical applications and sensitive data, such as in the case of payment cards and the like, a secure element is used to store the data. A secure element is a tamperproof chip that provides a secure memory and execution environment in which application code and application data can be securely stored and administered. The secure element ensures that access to the data stored on the card is provided only when authorized.

A secure element may include one or more security domains (SDs), each of which includes a collection of data, such as packages, applets, applications, and the like, which are authenticated using security keys.

Security domains may be associated with service providers and may include service provider applets or applications such as loyalty, couponing, and credit card.

A service provider system usually contains a trusted service manager (TSM) to communicate with a secure element on a mobile device to create a security domain on the secure element and install, provision and manage applets and applications on the secure element.

Service providers must be able to provide their services to a large number of customers with different mobile devices, equipped with different secure elements, and being serviced by a variety of mobile network operators.

From WO 2012/154780 an independent secure element management system is known, which employs an independent manager to manage and operate at the same time multiple secure elements residing on the same system or mobile device.

Known solutions are using the mobile device's CPU for managing the secure elements, and provide thus only restricted managing capabilities. In particular, the CPU provides merely routing capabilities to an indicated secure element, without support for management of the secure element and the applets residing thereon. C1arrying on operations such as removing an applet from a secure element, updating an applet on a secure element, or moving an applet from a secure element to another one, are not supported, and these operations usually require a factory or over-the-air update with script execution on the secure element.

Furthermore, as the CPU is vulnerable to operation system attacks, the conventional solutions do not provide the highest security level requested by security-critical smartcard applications.

It is therefore desirable to provide a solution for management of multiple secure elements which address the above-mentioned drawbacks.

### SUMMARY OF THE INVENTION

The present invention addresses the above object by the subject-matter covered by the independent claims. Preferred embodiments of the invention are defined in the dependent claims.

According to a first aspect of the present invention, an apparatus is provided comprising a plurality of secure elements, SEs. A respective one of the plurality of secure elements is a manger SE, which is connected to the remaining ones of the plurality of secure elements via at least one communication channel. The manager SE is configured to manage secure elements from the remaining ones of the plurality of secure elements.

By providing a dedicated manager secure element from a plurality of secure elements, residing on a smartcard or mobile device, with connections to the other secure elements and with special functions to manage the other secure elements, an environment of multipurpose secure elements is created. Within this environment, the manager SE, beside the usual functions it usually provides as a secure element, is able to directly interact with other secure elements on the smartcard, and control the secure elements and the applets residing thereon.

Throughout this description, the remaining secure elements are also referred to as slave secure elements (slave SEs) to distinguish them from the manager SE.

In some embodiments of the present invention, the manager SE comprises a database for storing authentication information corresponding to the remaining ones of the plurality of secure elements. The manager SE is configured to perform authentication of the secure elements based on the stored authentication information. Preferably, the authentication information comprises keys identifying the remaining secure elements.

This allows the manager SE to perform authentication of the slave SEs, achieving thus a high security level administration on the remaining SEs.

In some embodiments of the present invention, the manager SE further comprises an operating system, OS, the operating system comprising functions for managing the plurality of secure elements, in particular functions for moving applets from one secure element to at least another secure element.

This provides for a wide-ranged functionality of the manager SE in relation to the slave SEs, which goes far beyond only routing payload to a specified SE, as supported by conventional solutions for managing multiple SEs. As the OS responsible for authenticating and managing the slave SE resides on the manager SE it is tamper-resistant against operation system attacks. With other words, an attacker cannot gain control to the OS and unauthorized send payload to a third device.

Preferably the OS, respectively the functions supported, can access the database on the manager SE, to perform authentication of the slave SEs, using the keys stored in the database.

In some embodiments of the present invention, the apparatus comprises a plurality of interfaces which are connected to the manager SE over at least one further communication channel. The manager SE is configured to receive from an external device over the plurality of interfaces information comprising at least one of authentication information, payloads and APDU commands.

The interfaces may be implemented as part of an application programming interface (API) on the mobile device. In other embodiments the interfaces may reside on the manager SE.

Preferably, the at least one communication channel and the at least one further communication channel are end-to-end encrypted channels.

This provides for a secure exchange of communication between the manager SE and the external device on one hand, and between the manager SE and the slaves SEs on the other hand. In connection with the stored keys of the slave SEs, it thus prevents data being read or secretly modified, other than by the manager SE and the receiving slave SEs.

Preferably, one of the interfaces is an over-the-air, OTA, interface, and the manager SE is configured to receive the authentication information over the OTA interface. Alternatively, the authentication information, that is the keys of the slave SEs, can be provided in the manager SE during production and personalization of the smartcard.

In some embodiments of the present invention, the manager SE comprises a registry for storing information about applets and corresponding secure elements, wherein each entry in the registry comprises an applet identifier, AID, together with an address identifier, identifying a corresponding secure element containing the applet.

According to a second aspect of the present invention, a manager secure element, SE, is provided, comprising a database for storing authentication information for secure communication with a plurality of secure elements, and an operating system, OS, for providing management functions for the plurality of secure elements.

This provides for a wide-ranged functionality of the manager SE in relation to the slaves SE, which goes far beyond only routing payload to a specified SE as possible with conventional solutions for managing multiple SEs. As the OS resides on the manager SE it is tamper-resistant against attacks.

Preferably, the manager SE comprises at least one interface for communicating with an external device, for receiving the authentication information.

This provides the advantage of a uniform interface to be used for all external devices or TSMs for communicating with a particular SE. An external device does not need to implement a dedicated interface for each secure element to communicate with. Vice versa, no interface modifications at the secure elements are needed to accommodate communication with different TSMs. The manager SE according to this invention allows for a plug-and-play configuration with multiple SEs and TSMs.

In some embodiments of the present invention according to the second aspect, the manager SE comprises a registry for storing information about applets and corresponding secure elements, wherein each entry in the registry comprises an applet identifier, AID, together with an address identifier, identifying a corresponding secure element containing the applet. Preferably, the manager SE receives the information, to be stored in the registry, from the secure elements over end-to-end encrypted communication channels connecting the manager SE with the secure elements. The registry may also be initially configured, that is during production and personalization of the smartcard, with entries corresponding to all other secure elements on the card and the applets installed thereon. This initial configuration can be managed and changed by the manager SE.

By storing in the manager SE information related to applets and their locations on respective SEs, the operating system of the manager SE can implement special functions to select and manage other secure elements and their applets, providing thus a very high security level administration of the other SEs.

According to a third aspect of the present invention, a method is provided for managing a plurality of secure elements by a manager secure element SE according to the second aspect of the present invention. In a first step, applets from a source secure element are moved to a target secure element. In a subsequent step, the registry of the manager SE is updated. Preferably, this is realized by replacing in the entry corresponding to the applet identifier of the moved applet, the address identifier of the source secure element with the address identifier of the target secure element.

The registry within the manager SE allows to keep track of the current locations of applets.

According to a fourth aspect of the present invention, a method for routing payloads to secure elements by a manager SE is provided. Preferably, the manager SE is the manager SE according to the second aspect of the invention. The method comprises in a first step, receiving from an external device a payload to be routed to an applet on a secure element, the payload comprising an applet identifier, AID. In a further step, the manager SE checks whether the applet with the identifier AID is contained in the manager SE. If the applet with the identifier AID is not contained in the manager SE, the manager SE checks the registry, to determine a secure element which contains the applet, that is, a secure element, the applet is located on. Upon locating a secure element, the manager SE establishes a communication session with the secure element. After establishing the communication session, payloads can be sent to the secure element.

This provides the advantage of a very high assurance that the payload will reach the destination SE without the danger of being re-routed by a malicious third-party attacker. Further, as the method steps are executed in the local operating system of the manager SE, the damages produced by the operating system being hacked are isolated.

In some embodiments of the present invention according to the fourth aspect, checking the registry to determine a secure element which contains the applet, comprises searching in the registry for an entry corresponding to the applet identifier, AID, and determining the address identifier of a secure element on which the applet resides.

Preferably, if no entry is found in the registry, the manager SE returns to the external device an error massage or response, indicating that the applet was not found.

In some embodiments of the present invention, the method according to the third aspect comprises further routing payloads to secure elements by performing the steps according to the fourth aspect of the present invention.

In a further aspect of the present invention, a computer program product is provided. The computer program product comprises instructions which, when the program is executed by a computer, cause the computer to carry out the method of the third and/or fourth aspect of the present invention.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which
- Figure 1: shows logical block diagrams of conventional solutions for managing a plurality of secure elements;
- Figure 2: shows a logical block diagram illustrating a mobile device with a manager SE according to an embodiment of the invention;
- Figure 3: shows a flow chart of a method for routing payloads to secure elements according to an embodiment of the invention;
- Figure 4: shows a signal diagram of a method for routing payloads to secure elements according to an embodiment of the invention.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

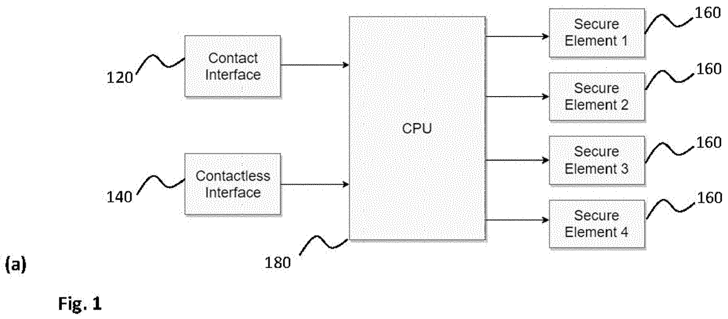

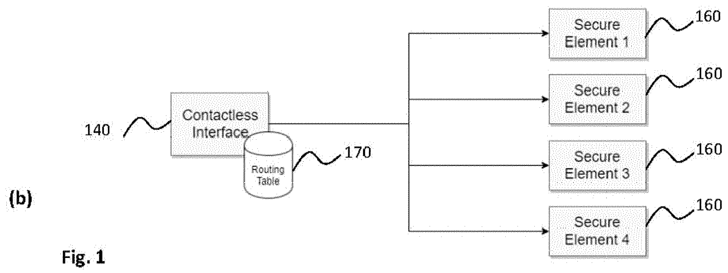

Fig. 1 shows logical block diagrams of conventional solutions for managing a plurality of secure elements. Fig. 1a shows an independent secure element manager (e.g., a CPU 180) for controlling access to multiple secure elements 160. The secure element manager 180 forwards over a contact interface 120 or a contactless interface 140 payload (e.g., APDU commands) received from a TSM (not shown) to a secure element 160. The secure element, the payload is to be forwarded to, may be selected using a routing table 170, as depicted in Fig. 1b.

A drawback of this solution is that the independent secure element manager 180 controls access to the secure elements without managing cryptographic keys. Thus, the manager 180 can only provide routing capabilities, without providing any ways to directly manage the secure elements, such as, for instance management of applets according to available memory space of the secure elements. Further, the manager 180 cannot perform any authentication of the secure element, the payload is routed to, and is thus vulnerable to operation system attacks.

The present invention proposes a solution for managing multiple SEs in a mobile device or smartcard in an efficient and secure manner.

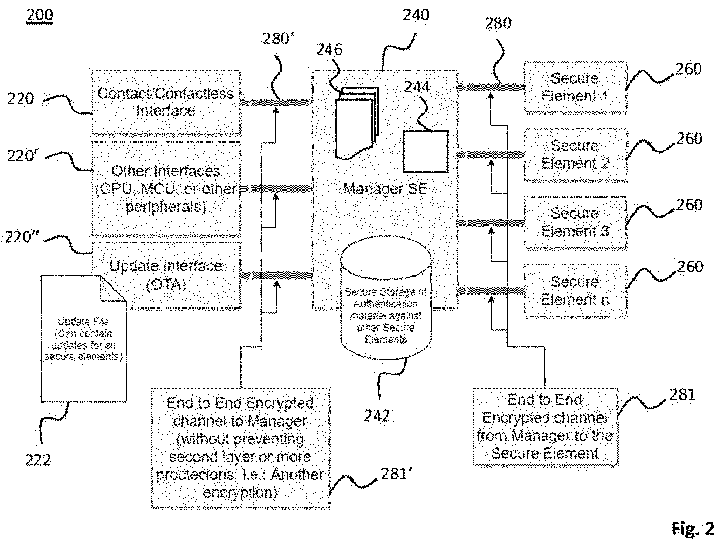

Fig. 2 shows a logical block diagram illustrating an apparatus 200 according to an embodiment of the present invention.

The apparatus 200, such as a mobile computing device or a smartcard, comprises a plurality of secure elements (SEs), wherein a respective one of the plurality of secure elements is a manger SE 240, while the other secure elements are slave SEs 260, being controlled and managed by the master SE 240.

The master SE 240 may be connected to the plurality of slave SE 260 through at least one communication channel 280. The master SE 240 may be connected to each slave SE 260 through a dedicated communication channel.

To ensure that payload is transferred securely between the master SE 240 and the slave SEs 260, the at least one communication channel is preferably an end-to-end encrypted channel.

The manager SE 240 may comprise a database 242 for storing authentication information corresponding to the slave secure elements 260. Using this authentication information, the manager SE 240 is able to perform authentication of the respective slave SEs 260 and to securely control the slave SEs, in particular to securely manage applets located on the slave secure elements.

Preferably, the authentication information comprises confidential and cryptographic data, in particular cryptographic keys, of the slave secure elements.

For receiving payload from an external device, such as a trusted service manager TSM, the apparatus 200 comprises further a plurality of interfaces 220, 220', 220". The plurality of interfaces may be connected to the manager SE 240 over at least one further communication channel 280'. Preferably, each interface is connected to the master SE 240 through a dedicated channel. As with the communication channel 280, connecting the master SE with the slave SEs, the communication channel(s) connecting the plurality of interfaces 220, 220', 220"with the manager SE 240 may be end-to-end encrypted channel(s).

These interfaces may be implemented as part of an application programming interface (API) on the mobile device (i.e., apparatus 200). In other embodiment the interfaces may be resident at the manager SE along with the OS 242, database 244, and registry 246. With other words, the manager SE has different interfaces than the slaves SE. These interfaces may be placed on the manager SE during production of the smartcard, that is, during hardware placement.

The manager SE 240 may receive from the external device over these interfaces information comprising at least one of authentication information, payloads and APDU commands. In particular, one of the interfaces may be an over-the-air, OTA, interface 220". Over-The-Air (OTA) is a technology that allows the TSM (or SE issuer) to update or change data in the SEs without having to reissue new samples. In particular, OTA technology provides functionalities for managing applications on the secure elements, such as providing updated files 222, to be stored on one or several secure elements.

In addition, the manager SE 240 may receive over the OTA interface 220" the authentication information (i.e., the keys) needed for contacting the related slave secure elements. Alternatively, the keys may be stored on the manager SE during production and personalization of the smartcard. Providing the keys over a secure OTA session after production and personalization of the smartcard, has however the advantage of a more flexible solution over pre-storing the key information during production.

For managing the slave secure elements and the applets stored thereon, the manager SE 240 may comprise an operating system, OS, 244. The operating system 244 supports various functions for managing the plurality of slave secure elements 260, in particular functions for moving applets from one secure element to at least another secure element.

Since the manager SE has the authentication keys of the slave SEs stored in its database 242, and the OS 244 is able to access the database, the highest security level administration of the other secure elements is achieved.

Additionally, the manager SE 240 may comprise a registry 246 for storing information about applets and corresponding secure elements, which the applets are located on. Preferably, each entry in the registry 246 comprises an applet identifier, AID, together with an address identifier, identifying the corresponding secure element 260 containing the applet. The address identifier may be a I2C bus address.

By using the registry 246, the manager SE 240, respectively its operating system OS 244, is able to implement routing functions to directly forward payload received over the plurality of interfaces 220, 220', 220" to their destination SEs 260.

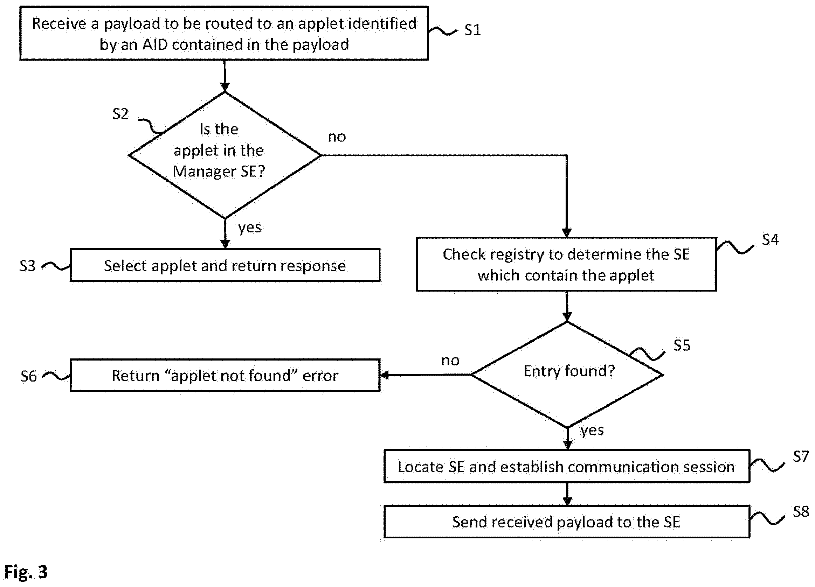

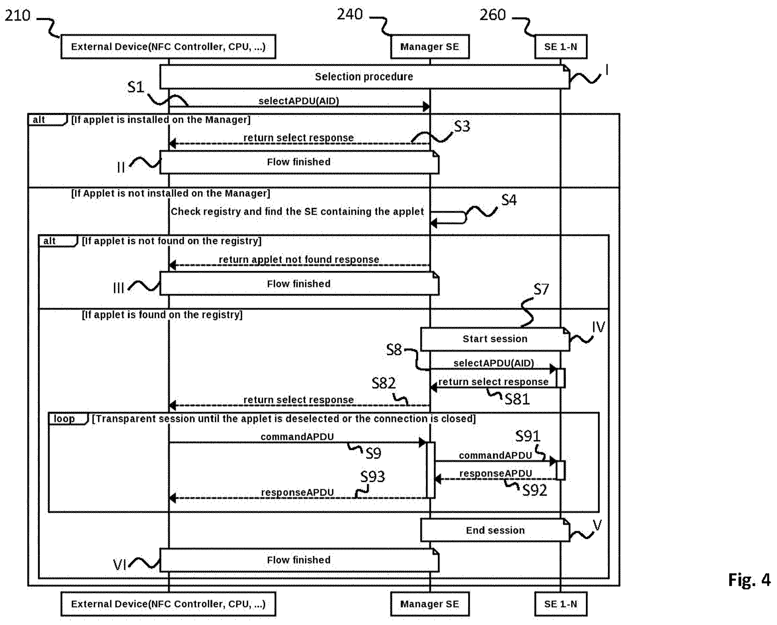

A method for routing payloads to secure elements by a manager SE according to an embodiment of the invention, will be described in the following with reference to Figures 3 and 4. The manager SE performing the routing method may be implemented by the manager SE of Fig. 2.

With reference to Fig. 3, in a first step S1, a payload is received at the manager SE. The payload was sent by an external device (such as the external device 210 in Fig. 4), and comprises an applet identifier, AID, of an applet to be selected for receiving the payload. For instance, the payload may be in from of a selectAPDU(AID) command, as depicted by corresponding step S1 in Fig. 4.

In a subsequent step S2, the manager SE 240 checks whether the applet to be selected is located on the manager SE. If the applet is found on the manager SE, the applet will be selected and the manager SE returns in step S3 a response to the external device. In this case the selection procedure (identified by roman numeral I in Fig. 4) ends and the communication flow between the external device 210 and the manager SE 240 is finished (identified by roman numeral II in Fig. 4).

If the applet identified by AID is not found in the manager SE, the manager SE checks in step S4 its registry 246, whether it contains an entry for the AID, indicating the corresponding identifier or address of the secure element (that is, one of the slave SE 260), the applet might be located on. If no entry is found in the registry corresponding to the AID, the manager SE returns in step S6 an error message to notify the external device that the applet was not found. In this case the communication flow between the external device 210 and the manager SE 240 is finished (identified by roman numeral III in Fig. 4).

On the other hand, if a registry entry corresponding to the applet identifier AID was found in step S4, the manager SE retrieves the identifier/address of the slave SE from the registry, establishes a communication session with the slave SE in step S7, and sends the payload, received from the external device, to the slave SE in step S8.

After being established (c.f., roman numeral IV in Fig. 4) the communication session will keep running until a termination criterion (c.f., roman numeral V in Fig. 4) is met. The termination criterion may be one of deselection of the applet, closing the connection, or selecting another applet. Upon terminating the session, V, the flow between the manager SE and the external device is finished (c.f., roman numeral VI in Fig. 4).

With reference to Fig. 4, during the established communication session, the manager SE forwards all further payloads received from the external device (in step S9) to the respective slave SE (step S91), fetches the response from the slave SE (step S92), and returns it to the external device (step S93).

The above-described method provide an efficient and secure way to directly route payload to SEs, avoid thus re-routing through conventional application processors or CPUs, which are vulnerable to OS attacks. Even if an attacker controls the system, he will not be able to send/re-route payloads to another device.

The above-described communication session established between the external device and the slave SEs through the manager SE is a transparent communication session, meaning that the external device and the slave secure elements do not have any knowledge about each other. That is, the sender merely has to care about sending the message to the manager SE, and the receiver to respond to it, without them knowing each other. The manager SE is the only entity on the mobile computing device that needs to know both the sender(s) and receiver(s).

A preferred use case of the present invention may be a device with a plurality of secure elements configured as follows. One of the SE may act as a SIM/eSIM with applets stored thereon (i.e., transport or payment applets, such as FeliCa, Visa, Mastercard or others). The device may contain other SEs, notably some SEs with available storage resources. The device may comprise further a manager SE, configured with the features of the present invention, that is, the capability to authenticate slave SEs, manage the data within slave SEs, and route payload to selected SEs. The present invention provides a way to move the applets from the storage-restricted SIM/eSIM to other secure element(s) with more storage space available and subsequently to update the registry of the manager SE for routing the payloads intended to the SIM/eSIM to the other secure elements, the applets have been moved to. Thus, free storage space can be obtained on particular SEs, while at the same time payloads intended for applets related to the particular SEs can be directly routed in an efficient and secure way to the SEs, the applets have been transferred to.

From a plurality of SEs to be included on a device, the manager SE may be defined by the device OEM/Manufacturer in relation with the SE vendors. During the manufacturing process the hardware (e.g., interfaces to external devices, as well as interfaces to the other SEs, in particular, end-to-end protected channels) and the software (e.g., OS, registry, database with SEs keys) specific to the manager SE may be customized accordingly.

The above embodiments for managing secure elements on a mobile computing device provide several advantages. In particular:
- The manager SE is able to access applets inside other secure elements on the mobile computing device, and to move the applets between the secure elements, and thus to directly manage the storage usage on the secure elements. This simplifies the architecture of the slave SEs and thus of the device, as there is no need for a SE firmware (operating system) within each slave SE, to change the distribution on the applets in a specific SE. Further, as the applets can be moved between various SEs, the applets are no longer tied to a specific secure element, and could be reused between secure elements.
- As no SE firmware is necessary on the SEs, there is no need for a server to orchestrate above operations, and every device would be an independent device depending on the data usage of the applets used by the device user. By providing a transparent communication channel between the external devices and the multiple SEs, in which the external device and the slave secure elements do not have any knowledge about each other, plug-and-play configurations with other smartcard applications is supported.
- The proposed solution enables the creation of an environment of multipurpose SE's in a device, in which a dedicated SE acts as manager SE, and the other SEs act as SIM/eSIM and provide secure storage or trusted execution.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. An apparatus (200) comprising a plurality of secure elements, SEs, (240; 260), wherein a respective one of the plurality of secure elements is a manger SE (240) connected to the remaining ones of the plurality of secure elements (260) via at least one communication channel (280), and configured to manage secure elements from the remaining ones of the plurality of secure elements (260).

2. The apparatus (200) according to claim 1, wherein the manager SE (240) comprises a database (242) for storing authentication information corresponding to the remaining ones of the plurality of secure elements (260), wherein the manager SE (240) is configured to perform authentication of the secure elements based on the stored authentication information.

3. The apparatus (200) according to claim 2, wherein the authentication information comprises confidential and cryptographic data, in particular cryptographic keys, identifying the remaining secure elements (260).

4. The apparatus according to any one of the preceding claims, wherein the manager SE (240) comprises an operating system, OS, (244), the operating system comprising functions for managing the plurality of secure elements (260), in particular functions for moving applets from one secure element to at least another secure element.

5. The apparatus (200) according to any one of the preceding claims, further comprising a plurality of interfaces (220, 220', 220"), the plurality of interfaces being connected to the manager SE (240) over at least one further communication channel (280'), wherein the manager SE (240) is configured to receive from an external device (210) over the plurality of interfaces (220, 220', 220") information comprising at least one of authentication information, payloads and APDU commands.

6. The apparatus according to claim 5, wherein the at least one communication channel (280) and the at least one further communication channel (280') are end-to-end encrypted channels (281, 281').

7. The apparatus according to claim 5 or 6, wherein one of the interfaces is an over-the-air, OTA, interface (220"), and the manager SE (240) is configured to receive the authentication information over the OTA interface (220").

8. The apparatus according to any one of the preceding claims, wherein the manager SE (240) comprises further a registry (246) for storing information about applets and corresponding secure elements, wherein each entry in the registry (246) comprises an applet identifier, AID, together with an address identifier, identifying a corresponding secure element (260) containing the applet.

9. A manager secure element, SE, (240) comprising at least one of:
- a database (242) for storing authentication information for secure communication with a plurality of secure elements (260);
- an operating system, OS, (244) for providing management functions for the plurality of secure elements; and
- at least one interface (220, 220', 220") for communicating with external devices.

10. The manager SE (240) according to claim 9, further comprising a registry (246) for storing information about applets and corresponding secure elements, wherein each entry in the registry (246) comprises an applet identifier, AID, together with an address identifier, identifying a corresponding secure element (260) containing the applet.

11. A method for managing a plurality of secure elements (260) by the manager secure element SE (240) according to claim 10, the method comprising the steps:
- moving applets from a source secure element (260) to a target secure element (260); and
- updating the registry (246) entries, corresponding to the applet identifier, AID, of the moved applets, by replacing the address identifier of the source secure element with the address identifier of the target secure element.

12. A method for routing payloads to secure elements by the manager SE (240) according to claim 10, the method comprising the steps:
- receiving (S1) from an external device (210) a payload to be routed to an applet on a secure element, the payload comprising an applet identifier, AID;
- checking (S2) whether the applet with the identifier AID is contained in the manager SE (240); and
- if the applet with the identifier AID is not contained in the manager SE (240):
- checking (S4) the registry (246) to determine a secure element (260) which contain the applet;
- establishing (S7) a communication session with the determined secure element (260); and
- sending (S8) the payload to the determined secure element (260).

13. The method according to claim 12,
wherein checking (S4) the registry (246), to determine a secure element (260) which contain the applet, comprises searching in the registry (246) for an entry corresponding to the applet identifier, AID, and determining the address identifier of a secure element (260) on which the applet resides; and
wherein if no entry is found in the registry (246), the method further comprises returning (S6) to the external device (210) an error response, indicating that the applet was not found.

14. The method according to claim 11, further comprising routing payloads to secure elements by performing the steps according to claim 12 or 13.

15. A computer program product, comprising instructions which, when the program is executed by a computer, cause the computer to carry out the method of claim 11 or/and claim 12.

## Amended claims

### Amended claims in accordance with Rule 137(2) EPC.

1. An apparatus (200) comprising a plurality of secure elements, SEs, (240; 260) residing on a smartcard or a mobile device, wherein a respective one of the plurality of secure elements is a manger SE (240) connected to the remaining ones of the plurality of secure elements (260) via at least one communication channel (280), and configured to manage secure elements from the remaining ones of the plurality of secure elements (260), wherein the manager SE (240) comprises a registry (246) for storing information about applets and corresponding secure elements, wherein each entry in the registry (246) comprises an applet identifier, AID, together with an address identifier, identifying a corresponding secure element (260) containing the applet.

2. The apparatus (200) according to claim 1, wherein the manager SE (240) comprises a database (242) for storing authentication information corresponding to the remaining ones of the plurality of secure elements (260), wherein the manager SE (240) is configured to perform authentication of the secure elements based on the stored authentication information.

3. The apparatus (200) according to claim 2, wherein the authentication information comprises confidential and cryptographic data, in particular cryptographic keys, identifying the remaining secure elements (260).

4. The apparatus (200) according to any one of the preceding claims, wherein the manager SE (240) comprises an operating system, OS, (244), the operating system comprising functions for managing the plurality of secure elements (260), in particular functions for moving applets from one secure element to at least another secure element.

5. The apparatus (200) according to any one of the preceding claims, further comprising a plurality of interfaces (220, 220', 220"), the plurality of interfaces being connected to the manager SE (240) over at least one further communication channel (280'), wherein the manager SE (240) is configured to receive from an external device (210) over the plurality of interfaces (220, 220', 220") information comprising at least one of authentication information, payloads and APDU commands.

6. The apparatus according to claim 5, wherein the at least one communication channel (280) and the at least one further communication channel (280') are end-to-end encrypted channels (281, 281').

7. The apparatus according to claim 5 or 6, wherein one of the interfaces is an over-the-air, OTA, interface (220"), and the manager SE (240) is configured to receive the authentication information over the OTA interface (220").

8. A manager secure element, SE, (240), residing on a smartcard or a mobile device, comprising:
- a database (242) for storing authentication information for secure communication with a plurality of secure elements (260) residing on the smartcard or the mobile device;
- an operating system, OS, (244) for providing management functions for the plurality of secure elements;
- at least one interface (220, 220', 220") for communicating with external devices; and
- a registry (246) for storing information about applets and corresponding secure elements, wherein each entry in the registry (246) comprises an applet identifier, AID, together with an address identifier, identifying a corresponding secure element (260) containing the applet.

9. The manager secure element, SE, (240) according to claim 8, configured to manage a plurality of secure elements connected thereto by moving applets from a source secure element (260) to a target secure element (260) of the plurality of secure elements; and updating the registry (246) entries, corresponding to the applet identifier, AID, of the moved applets, by replacing the address identifier of the source secure element with the address identifier of the target secure element.

10. The manager secure element, SE, (240) according to claim 8 or 9, configured to manage secure elements by routing payloads received from an external device (210) to applets on target secure elements (260), wherein a payload comprises an applet identifier, AID, of an applet on a secure element for receiving the payload, wherein the manager secure element (240) is configured to determine from the registry (246) using the applet identifier AID a secure element, which contains the applet, to establishing a communication session with the determined secure element (260), and to send the payload to the determine secure element (260).

11. A method for managing a plurality of secure elements (260), residing on a smartcard or mobile device, by the manager secure element SE (240) according to claim 8, the method comprising the steps:
- moving applets from a source secure element (260) to a target secure element (260) of the plurality of secure elements; and
- updating the registry (246) entries, corresponding to the applet identifier, AID, of the moved applets, by replacing the address identifier of the source secure element with the address identifier of the target secure element.

12. A method for routing payloads to secure elements, residing on a smartcard or mobile device, by the manager SE (240) according to claim 8, the method comprising the steps:
- receiving (S1) from an external device (210) a payload to be routed to an applet on a secure element, the payload comprising an applet identifier, AID;
- checking (S2) whether the applet with the identifier AID is contained in the manager SE (240); and
- if the applet with the identifier AID is not contained in the manager SE (240):
- checking (S4) the registry (246) to determine a secure element (260) which contains the applet;
- establishing (S7) a communication session with the determined secure element (260); and
- sending (S8) the payload to the determined secure element (260).

13. The method according to claim 12,
wherein checking (S4) the registry (246), to determine a secure element (260) which contain the applet, comprises searching in the registry (246) for an entry corresponding to the applet identifier, AID, and determining the address identifier of a secure element (260) on which the applet resides; and
wherein if no entry is found in the registry (246), the method further comprises returning (S6) to the external device (210) an error response, indicating that the applet was not found.

14. A computer program product, comprising instructions which, when the program is executed by a computer, cause the computer to carry out the method claim 11 or/and claim 12.
